# EUROPÄISCHE PATENTSCHRIFT

(11) **EP 0 678 679 B1**
(45) Veröffentlichungstag und Bekanntmachung des Hinweises auf die Patenterteilung: **10.06.1998**
(21) Anmeldenummer: 95104319.9
(22) Anmeldetag: 23.03.1995
(51) Int. Cl.: F16B 37/06

(54) **Ein durch Nieten in ein Blechteil einsetzbares Element**
Element mountable in a piece of sheet metal by means of cold forming
Elément à montage par rivetage dans une pièce en tôle

(30) Priorität: 25.03.1994 DE 4410475
(43) Veröffentlichungstag der Anmeldung: 25.10.1995
(73) Patentinhaber: PROFIL-Verbindungstechnik GmbH & Co. KG, 61381 Friedrichsdorf (DE)
(72) Erfinder: Müller, Rudolf, D-60437 Frankfurt (DE)
(74) Vertreter: Morgan, James G.

(56) Entgegenhaltungen:
- EP-A- 0 437 011
- EP-A- 0 561 715
- WO-A-94/01688
- DE-A- 2 545 581
- DE-C- 3 704 763
- FR-A- 1 312 056
- GB-A- 852 411
- US-A- 1 579 875
- US-A- 3 127 919
- US-A- 3 253 631
- US-A- 3 337 946
- US-A- 3 736 969
- US-A- 3 770 037
- US-A- 4 543 023
- US-A- 4 637 766

## Beschreibung

Die vorliegende Erfindung betrifft ein durch Nieten in ein Blechteil einsetzbares Element bestehend aus einem Schaftteil und einem einstückig daran angeformten Kopfteil, wobei das Element an seiner als Anlagefläche dienenden Unterseite konkave, umfangsmäßig geschlossene Felder sowie mindestens eine sich spiralförmig um das Schaftteil herum angeordnete Vertiefung. Ein Element dieser Art ist aus der DE-C-37 04 763 bekannt. Weiterhin betrifft die vorliegende Erfindung ein Verfahren zur Herstellung eines solchen Zusammenbauteils.

Wie in der DE-C-37 04 763 zu lesen ist, besteht die dortige Aufgabe darin, eine Verbindung zwischen einem Bolzen, vorzugsweise einer Schraube, und einem insbesondere dünnen Blech zu schaffen, die einfach und kostengünstig hergestellt werden kann. Zur Lösung dieser Aufgabe wird vorgeschlagen, eine Blechvorbereitung vorzunehmen, wobei ein Halsdurchzug erzeugt wird, auf der dem Kopf der Schraube zugewandten Seite des Blechteiles.

Nach dem Einführen der Schraube in die Bohrung des so vorbereiteten Blechteiles wird ein Teil des Halsdurchzuges in die Vertiefungen in der Unterseite des Kopfes hineingedrückt. Dieses Hineindrücken erfolgt offensichtlich, wenn auch nicht ausdrücklich erwähnt in der Entgegenhaltung, in einer Presse unter Anwendung einer Matrize, die auf die Unterseite des Blechteiles drückt.

Mit anderen Worten ist es zur Herstellung der festen und unlösbaren Verbindung bei der Entgegenhaltung erforderlich, nicht nur auf den Kopf der Schraube zu drücken, sondern das Blech muß auch auf der Unterseite durch eine Matrize abgestützt werden.

Durch die Rückverformung des Halskragens wird das Blechmaterial zwangsläufig in das Gewinde hineinverformt.

Dies ist zwar expressis verbis nicht in der DE-PS 37 04 763 gesagt, aber dieser Sachverhalt wird durch einen Vergleich der Figuren 4 und 5 ersichtlich, und außerdem ist dieses Hineinverformen des Materials in das Gewinde auch notwendig, da sonst die geforderte feste und unlösbare Verbindung nicht zustande kommen könnte.

Weitere, ähnliche, durch Nieten in ein Blechteil einsetzbare Elemente sind bereits bekannt, bei denen das Schaftteil des als Gewindebolzen ausgebildeten Elementes in ein vorgefertigtes Loch des Blechteils von einer Seite eingeführt wird, und ein Flanschteil des Kopfes an dieser Seite des Blechteils anliegt. Das Material des Blechteils wird anschließend in einem Setzvorgang so verformt, daß das Material in eine sehr kleine, unmittelbar benachbart zur Anlagefläche des Kopfteiles angeordnete Rille am Schaftteil des Elementes plastisch eingeformt wird, wodurch das Element im Blech befestigt wird. Dabei weist das Kopfteil des Elementes and der Anlagefläche sich im wesentlichen radial erstreckende Nasen auf, die in das Blechteil während des Einsetzens hineingepreßt werden und hierdurch eine Verdrehsicherung bilden. Die Verdrehsicherung soll die Anbringung einer Mutter am mit einem Gewinde versehenen Schaftteil ermöglichen, ohne daß das Element selbst im Blechteil durchdreht.

Solche aus Blechteilen und Elementen bestehenden Zusammenbauteile werden in der industriellen Fertigung häufig eingesetzt, beispielsweise bei der Herstellung von Automobilen oder Waschmaschinen, um ein weiteres Bauteil an dem aus Blechteil und Element bestehenden Zusammenbauteil zu befestigen oder umgekehrt. Vorteilhaft ist dabei, daß die Anlagefläche des Kopfteils auf der anderen Seite des Blechteils liegt, vom an diesem zu befestigenden weiteren Bauteil, so daß das Blechteil in Kompression belastet ist.

In der Praxis überzeugen aber die bisher bekannten, unmittelbar oben beschriebenen Elemente nach dem Stand der Technik nicht im vollen Maße, weil die Gefahr des Lockerns des Elementes bei Transport oder Lagerung noch vor Anbringung des Bauteils relativ groß ist, insbesondere bei Nietbolzen, die zur Anwendung mit relativ dünnen Blechen gedacht sind, wobei nicht selten die Lockerung so ausgeprägt ist, daß das Element verloren geht oder eine Orientierung annimmt, die für die maschinelle Weiterverarbeitung des Blechteils nicht annehmbar ist. Die Lockerung der bisher bekannten Elemente dieser Art führt auch dazu, daß die vorgesehene Verdrehsicherung in manchen Fällen nicht ausreichend ist, so daß bei der Anbringung der Mutter das Element durchdreht, bevor eine ausreichende Klemmkraft erzeugt werden kann. Diese Schwierigkeiten sind besonders nachteilig in Karosseriebau und in anderen Bereichen, wo die Kopfteile der Elemente in einem Hohlraum liegen, die nach dem Verbauen des Zusammenbauteils nicht mehr erreichbar sind. Dreht unter diesem Umstand ein Element durch oder geht es verloren, so kann der zu fertigende Gegenstand, beispielsweise ein Auto, nicht mehr im Rahmen der normalen Produktion fertiggestellt werden, sondern muß auf eine aufwendigere Weise repariert werden. Solche Umstände sollten soweit wie möglich vermieden werden.

Ein weiteres Problem, das insbesondere bei dünnen Blechen ausgeprägt ist, liegt darin, daß die die Verdrehsicherung bildenden Nasen eine gewisse Höhe, d. h. eine Erhöhung von der Anlagefläche des Kopfteiles, aufweisen müssen, um überhaupt die Verdrehsicherung zu erreichen. Bei dünnen Blechen wird das Material des Blechteils durch die Nasen soweit eingedrückt, daß die volle Festigkeit des Blechteils nicht mehr zur Verfügung steht, was auch zu Schwierigkeiten in der Praxis führen kann.

Nachteilig ist außerdem, daß die feine Rille zur Aufnahme des plastisch verformten Blechteils beim Vernieten des Elementes mit dem Blechteil schwierig herzustellen ist und zudem die Schraube unnötig verteuert. Im übrigen führt diese Rille zu einer unerwünschten Herabsetzung der Festigkeit der Schraube bzw. dessen Ermüdungseigenschaften aufgrund der scharfen Kanten und der hervorgerufenen Querschnittsverminderung des Elementes. Aufgrund der Abmessungen der Rille entsteht auch eine unzureichende Befestigung des Elementes im Blechteil, was die oben erwähnte Neigung des Elementes, sich im Blechteil zu lockern oder gar herauszufallen, verschlimmert.

Es ist die Aufgabe der vorliegenden Erfindung, ein Element der eingangs genannten Art zu schaffen, das preisgünstig herstellbar und einsetzbar ist, wobei die Gefahr des Lockerns oder des Verlustes des Elementes aus dem Blechteil wesentlich herabgesetzt und vorzugsweise ausgeschlossen ist, wobei sowohl eine gute Verdrehsicherung des Elementes im Blechteil wie auch eine starke Verbindung möglich ist, und zwar auch dann, wenn man mit dünnen Blechen oder mit Nichteisenblechen, beispielsweise Blechen aus Aluminium oder deren Legierungen, arbeitet. Darüber hinaus soll ein Zusammenbauteil bestehend aus einem Blechteil und mindestens einem solchen Element, sowie ein Verfahren zum Vernieten des Elementes mit dem Blechteil zur Verfügung gestellt werden.

Zur Lösung dieser Aufgabe wird nach der Erfindung ein Element vorgesehen, das sich dadurch auszeichnet, daß die konkaven Felder teilweise durch sich vom Schaftteil nach außen wegerstreckende Rippen begrenzt sind, wobei die schaftseitigen Enden der Rippen sich erhaben am Schaftteil entlang erstrecken und an den dem Kopfteil abgewandten Enden in die Vertiefung übergehen.

Durch diese Ausbildung gelingt es beim Vernieten des Elements mit dem Blechteil mittels einer geeigneten konzentrisch zum Schaftteil angeordneten Matrize, das Material des Blechteils plastisch in die konkaven umfangsmäßig geschlossenen Felder sowie in die genannte Vertiefung zu verformen ohne daß eine wesentliche Verdünnung des Blechteils durch die Rippen eintritt, so daß die Festigkeit der vernieteten Verbindung bereits aus diesem Grund im Vergleich zu den bisherigen Elementen nach dem Stand der Technik wesentlich erhöht ist. Dadurch, daß die schaftseitigen Enden der Rippen sich erhaben am Schaftteil entlang erstrecken, wird die Verdrehsicherung nicht nur durch das in die konkaven Felder hineingetriebene Material, sondern auch durch den Formschluß zwischen diesen schaftseitigen Enden der Rippen und dem Blechteil erreicht. Dies führt dazu, daß die Verdrehsicherung im Vergleich zu der Verdrehsicherung mit Elementen nach dem Stand der Technik wesentlich verbessert ist. Dadurch, daß das Blechteil nicht unnötig verdünnt wird beim Einsetzen des Elementes, ist es möglich, die Vertiefung etwas weiter von der Unterseite des Kopfes anzuordnen, als dies mit der Rille nach dem Stand der Technik möglich ist, so daß diese Vertiefung herstellungsmäßig leichter zu realisieren ist. Dies führt auch dazu, daß die Form der Vertiefung sauberer als bisher ausgeführt werden kann und stellt sicher, daß das Material des Bleches während der plastischen Verformung mittels der Matrize vollständiger in die Vertiefung hineinfließt und somit einen erhöhten Widerstand gegen Verlust des Elementes erzeugt.

Besonders vorteilhaft ist es, wenn das Schaftteil des Elements im Bereich der erhabenen Rippen im Vergleich zum vom Kopfteil abgewandten Schaftteil einen größeren Durchmesser aufweist, wobei die mindestens eine Vertiefung sich in diesem Bereich des größeren Durchmessers befindet. Aufgrund dieser Ausbildung wird das Element weniger durch die Vertiefung geschwächt, so daß die Nennfestigkeit des Elementes eher voll ausgenützt werden kann und andererseits die Ermüdungseigenschaften des Elementes verbessert werden können. Auch wird die Verdrehsicherung weiter verbessert. Besonders wichtig bei dieser Ausbildung ist aber, daß das Fließverhalten des Materials des Blechteils beim Einsetzen des Elementes verbessert werden kann. Das vorgefertigte Loch im Blechteil muß nämlich einen Durchmesser aufweisen, der die Hindurchführung des Schaftteils des Elementes ermöglicht, ohne daß dieser beschädigt wird. Durch den Bereich größeren Durchmessers wird beim Einsetzen des Elementes das Blechmaterial zunächst nach außen getrieben, da der Bereich des großen Durchmessers das Loch sozusagen aufweitet, und dies schafft zusätzliches Material, das in die konkaven umfangsmäßig geschlossenen Felder bzw. in die Vertiefung hineingetrieben werden kann. Es wäre auch denkbar, entsprechend dem sogenannten Klemmlochnietverfahren der Anmelderin (Europäische Patentanmeldung 92 117 466.0), das Blechmaterial im Bereich des Loches konisch zu verformen, und zu einem Kegelstumpfabschnitt auszuformen, wodurch nach dem Einsetzen des Elementes durch das am engeren Ende der konischen Ausformung des Bleches vorhandene Loch diese im weiteren Verlauf des Setzvorganges wieder flachgepreßt wird und auch hierdurch zusätzliches Material zur Sicherstellung einer hochfesten Verbindung zwischen dem Element und dem Blechteil geschaffen wird.

Die mindestens eine Vertiefung, die sich spiralförmig um das Schaftteil herumstreckt, kann vorteilhafterweise durch eine Gewinderille gebildet werden, insbesondere eine Gewinderille, welche eine Fortsetzung eines auf dem Schaftteil des Elementes vorhandenen Gewindes darstellt. In dieser Weise wird die Vertiefung mit dem gleichen Vorgang realisiert, der zur Ausbildung des Gewindes benutzt wird. Dies führt zu einer wesentlichen Kostenersparnis bei der Herstellung des Elementes und auch zu einer sauberen Ausbildung der Vertiefung. Werden, wie an sich bevorzugt, die Rippen, die sich an ihren schaftseitigen Enden erhaben am Schaftteil entlang erstrecken, vor dem Gewindewalzvorgang ausgebildet, so können diese erhabenen Rippenteile ohne weiteres während des Gewindewalzvorganges verformt werden, so daß sie alle in der Vertiefung zu Ende gehen. Es ist aber andererseits durchaus denkbar, daß die erhabenen Rippenteile erst nach dem Gewindewalzvorgang in einem getrennten Vorgang, beispielsweise auch bei einem Walzvorgang, erzeugt werden. In diesem Falle könnte die Vertiefung in mehrere Abschnitte durch die erhabenen Rippen unterteilt werden. Allzulang sollten die erhabenen Teile der Rippen, die sich am Schaftteil entlang erstrekken, nicht werden, da sie sonst einen sauberen Sitz des anzubringenden Gegenstands beeinträchtigen könnten. Eine Ausnahme hierzu wäre, wenn das Element für die Anbringung einer elektrischen Klemme vorgesehen ist; hier könnten verlängerte Rippenteile eine erwünschte Kerbwirkung im Loch der Klemme verursachen, die zur Schaffung eines guten elektrischen Kontaktes nützlich wäre.

Die spiralförmige Vertiefung kann ein oder zwei Gewindegänge darstellen und kann auch in Form von Gewindeabschnitten vorliegen, vor allem dann, wenn die Vertiefung als mehrgängiges Gewinde ausgebildet ist, was grundsätzlich möglich wäre und zur Erfindung gehört.

Die spiralförmige Vertiefung hat noch einen großen Vorteil im Vergleich zu einer umlaufenden Rille. Wird nämlich nach einiger Zeit eine Mutter vom Schaftteil entfernt, so ist damit zu rechnen, aufgrund von Verschmutzung oder Korrosion des Gewindeteils bzw. der Mutter, daß eine erhöhtes Drehmoment zur Entfernung der Mutter erforderlich ist. Ein solches erhöhtes Drehmoment würde aber dazu führen, daß das Element aufgrund der Spiralform der Vertiefung noch fester gegen das Blechmaterial gepreßt wird, so daß ein erhöhter Widerstand gegen Durchdrehung des Elementes vorliegt.

Die spiralförmige Vertiefung könnte aber schließlich mit einem Steigungswinkel von 0°, d. h. als umlaufende Rille ausgebildet werden, und Vertiefungen dieser Form gehören auch zur vorliegenden Erfindung. Sie könnten beispielsweise dann besonders nützlich sein, wenn das Element nicht als Gewindebolzen, sondern beispielsweise als Lagerzapfen verwendet wird. Die oben erläuterten Vorteile, wonach die Vertiefung erfindungsgemäß in einem größeren Abstand von der Unterseite des Kopfteils angeordnet werden kann als es beim Stand der Technik möglich ist, gelten auch für die Ausbildung der Vertiefung als eine umlaufende Rille.

Die umfangsmäßig geschlossenen Felder haben vorzugsweise ihre größte Tiefe benachbart zum Schaftteil, wobei dies für die Verdrehsicherung und auch für die plastische Verformung des Materials des Blechteils beim Einsetzen des Elementes von Vorteil ist.

Besonders wichtig ist auch, daß die flächenmäßigen Anteile der Felder im Vergleich zu der Anlagefläche des Kopfteils so gewählt werden können, daß sie unter Berücksichtigung der Materialpaarung eine optimale Verdrehsicherung und unkritische Flächenpressung ergeben. Dieser Vorteil ermöglicht es auch, das Element der vorliegenden Erfindung bei weicheren Blechen, beispielsweise bei Blechen aus Aluminium oder Aluminiumlegierungen einzusetzten, die in Zukunft im Automobilbau vermehrt Verwendung finden werden. Durch entsprechende Oberflächenbehandlung der Elemente ist das Problem der galvanischen Korrosion heutzutage in den Griff zu bekommen, d. h. die galvanische Korrosion ist vermeidbar, so daß Elemente aus Eisenmaterialien nach der vorliegenden Erfindung auch ohne weiteres mit beispielsweise Blechen aus Aluminiumlegierungen verwendet werden können.

Weiter bevorzugte Ausbildungen des Elementes gehen aus den Unteransprüchen 2 bis 6 hervor.

Nach Anspruch 7 wird das erfindungsgemäße Element in Kombination mit einem Blechteil beansprucht, wobei das Metall des Blechteils zumindest teilweise in die geschlossenen Felder und in die mindestens eine Vertiefung plastisch eingeformt ist.

Ein auf diese Weise entstandenes Zusammenbauteil kann so realisiert werden, daß das Blechteil an der der Anlagefläche des Kopfes abgewandten Seite eine sich zumindest im wesentlichen koaxial zur Längsachse des Elements erstreckende und ggf. unterbrochene Rille aufweist. Diese Rille kann insbesondere eine wellenförmige Bodenfläche aufweisen.

Die Form der Bodenfläche der Rille hängt auch von der Form der verwendeten Matrize ab. Diese kann beispielsweise so ausgebildet werden, daß sie zur Erzeugung der plastischen Verformung des Blechteilwerkstoffes eine umlaufende, wellenförmige, Berge und Täler aufweisende Stirnfläche hat, wobei die Berge in axialer Richtung der zylindrischen Matrize über die Täler hinausragen.

Das Zusammenbauteil kann so ausgeführt werden, daß im Blechteil zwischen den Rillenabschnitten einer unterbrochenen Rille über der planaren Fläche des Blechteils erhabene Bereiche vorhanden sind, die zur elektrischen Kontaktgabe dienen können, beispielsweise dann, wenn eine Klemme mittels einer Mutter an einem als Gewindebolzen ausgebildeten Element angeschraubt wird.

Die Erfindung umfaßt auch ein Verfahren zum Herstellen eines Zusammenbauteils der zuvor beschriebenen Art, wobei das Verfahren sich durch die nachfolgenden Schritte auszeichnet:
1. Die Ausbildung durch Stanzen und / oder Bohren eines Loches im Blechteil,
2. Das Einsetzen des Schaftteils des Elementes durch das so gebildete Loch, und
3. die plastische Verformung des Materials des Blechteils in der Nähe des Lochrandes, damit dieses zumindest teilweise die geschlossenen Felder und die mindestens eine Vertiefung ausfüllt und eine formschlüssige Verbindung zwischen dem Element und dem Blechteil bildet.

Das Befestigungselement der vorliegenden Anmeldung läßt sich auch gut verwenden, um zwei Bauteile miteinander zu verbinden, die gegeneinander verdreht werden können, wobei diese gegenseitige Verdrehung entweder im Sinne einer im Betrieb erwünschten Verdrehbewegung oder im Sinne einer einmaligen Ausrichtbewegung realisiert werden kann. Im letzteren Fall dient das Element im Zusammenbauzustand dann zur Fixierung der beiden Bauteile in der einmal gewählten Relativposition. Für die Realisierung dieser Verdrehmöglichkeiten können aber auch andere Befestigungselemente eingesetzt werden, wobei lediglich wesentlich ist, daß das Befestigungselement aus einem Kopfteil und einem Schaftteil besteht, wobei das Schaftteil im Bereich des Kopfteils eine um das Schaftteil herum erstreckende radiale Vertiefung aufweist.

Die Erfindung wird nachfolgend näher erläutert anhand von Ausführungsbeispielen unter Bezugnahme auf die Zeichnung, in welcher zeigt:
- Figur 1: eine Seitenansicht eines teilweise längsgeschnittenen, erfindungsgemäßen Elementes, das zum Vernieten mit einem Blechteil vorgesehen ist,
- Figur 2: ein Stirnansicht des Elementes in Richtung des Pfeils II der Figur 1,
- Figur 3: eine vergrößerte Darstellung des geschnittenen Teils des Elementes der Figur 1, so wie im Kreis III angegeben,
- Figur 4: eine Teilquerschnitt des Elementes der Figur 1 entsprechend der Schnittebene IV-IV der Figur 3,
- Figur 5: eine schematische Darstellung des Verfahrens zum Einsetzen eines erfindungsgemäßen Elementes nach den Figuren 1 bis 4 in ein Blechteil,
- Figur 6: das Endstadium des Einsetzverfahrens nach der Figur 5,
- Figur 7: eine detaillierte, schematische Darstellung dem linken Seite einer besonders bevorzugten erfindungsgemäßen Nietmatrize zur Anwendung mit der Verfahren nach den Figuren 5, 6,
- Figur 8: eine teilweise geschnittene, schematische Darstellung eines erfindungsgemäßen Zusammenbauteils bestehend aus einem Blechteil und einem damit vernieteten erfindungsgemäßen Element, d. h. ein Zusammenbauteil, das nach dem Verfahren der Figuren 5 und 6 hergestellt wurde,
- Figur 9: eine vergrößerte Darstellung des mit dem Kreis IX angedeuteten Bereiches des Zusammenbauteils nach der Figur 8,
- Figuren 10 bis 13: entsprechen den bisherigen Figuren 1 bis 4, jedoch mit einem Element in Form eines Lagerzapfens anstatt eines Gewindebolzens,
- Figuren 14 bis 17: entsprechen den Figuren 1 bis 4, jedoch mit einem Element in Form einer Lagerbuchse anstatt eines Gewindebolzens,
- Figuren 18 und 19: entsprechen den Figuren 8 und 9, jedoch mit einem Blechteil und einen damit vernieteten Mutterelement,
- Figuren 20: A bis H zeigen ein Befestigungselement ähnlich dem Befestigungselement der Figuren 1 bis 4, jedoch zur Anwendung mit zwei blechförmigen Bauteilen um eine relative Verdrehung zwischen diesen Bauteilen zu ermöglichen,
- Figuren 21 A bis H: zeigen ähnliche Figuren wie die Figuren 20 A bis H, wobei das Befestigungselement nicht als Bolzenelement, sondern als Mutterelement realisiert ist, und
- Figuren 22 bis 25: eine weitere Ausführungsform in Darstellungen entsprechend den Fig. 1 bis 4.

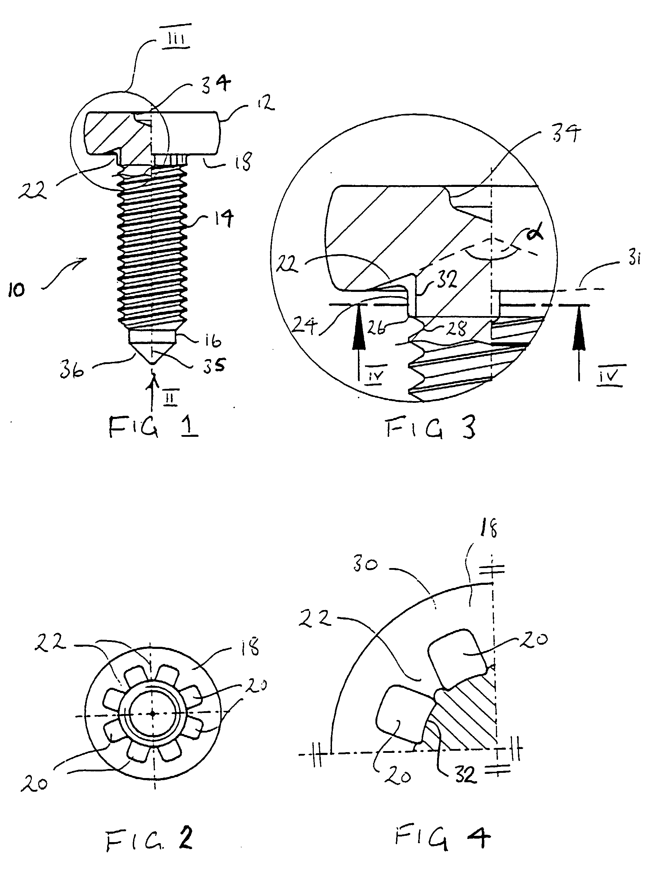

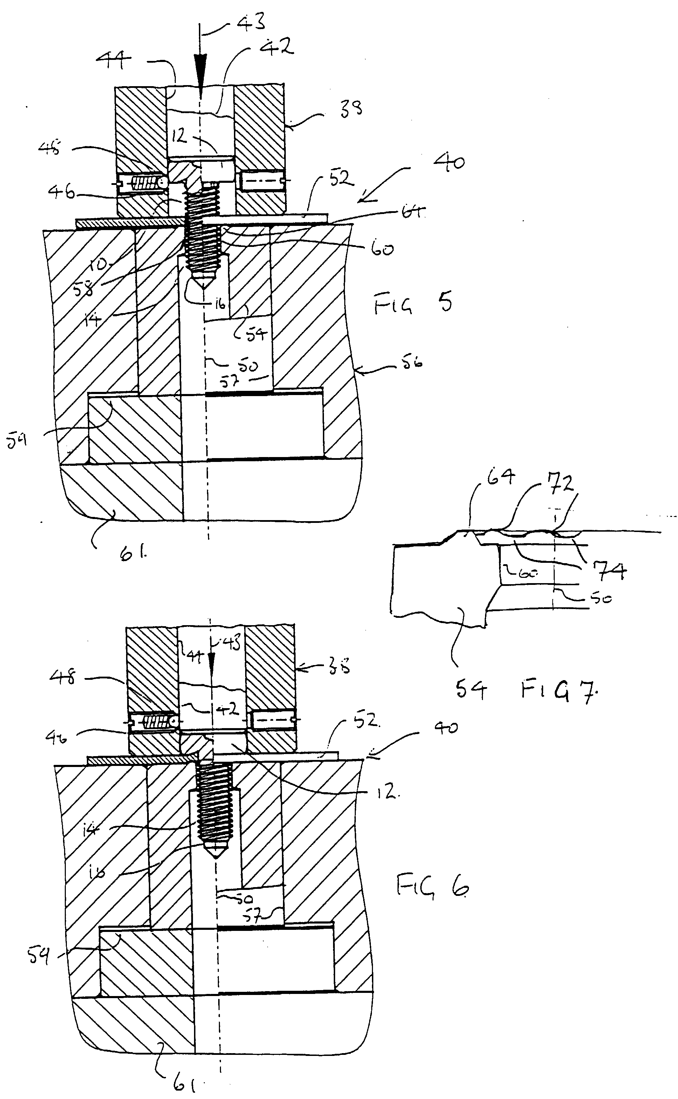

Die Figur 1 zeigt zunächst in Seitenansicht ein erfindungsgemäßes Element 10 in Form eines Gewindebolzens mit einem Kopfteil 12 und einem mit einem Gewinde 14 versehenen Schaftteil 16. Wie insbesondere aus den Figuren 2, 3 und 4 ersichtlich, weist das Element an seiner als Anlagefläche dienenden Unterseite 18 konkave, umfangsmäßig geschlossene Felder oder Taschen 20 auf, welche teilweise durch sich vom Schaftteil 16 nach außen wegerstreckenden Rippen 22 begrenzt sind, wobei die schaftseitigen Teile 24 der in Seitenansicht rechtwinkligen Rippen sich erhaben am Schaftteil 16 entlang erstrecken und an den dem Kopfteil 12 abgewandten Enden 26 in mindestens eine sich spiralförmig um das Schaftteil herum angeordnete Vertiefung 28 übergehen, die hier als eine Gewinderille, d. h. als eine Fortsetzung des Gewindes 14 des Schaftteils 16 ausgebildet ist.

Die geschlossenen Felder 20 sind an ihrer radial äußeren Seite durch eine umlaufende Umfangsfläche 30 des Kopfes begrenzt, wobei die Rippen 22 an ihren radial äußeren Enden in diese Umfangsfläche stufenlos übergehen. An ihrer radial inneren Seite sind die Felder 20 durch eine zylindrische Umfangsfläche 32 des Schaftteils begrenzt.

Die dem Schaftteil zugewandten Flächen der radial nach außen erstreckenden Teile der Rippen 22 können entgegen der zeichnerischen Darstellung in der Figur 3 auch in der gleichen Ebene liegen wie die Umfangsfläche 30, oder sie können, wie in der Figur 3 ersichtlich, schräg zur durch die Unterseite 30 des Kopfteils 12 definierten Ebene 31 verlaufen und von dieser Ebene zurückversetzt sein, so daß sie auf der schaftseitigen Seite dieser Ebene nicht hervorstehen. Die Umfangsfläche 30 wie auch die schaftseitigen Flächen der sich radial erstreckenden Bereiche der Rippen 22 bilden die eigentliche Anlagefläche des Kopfteiles 12.

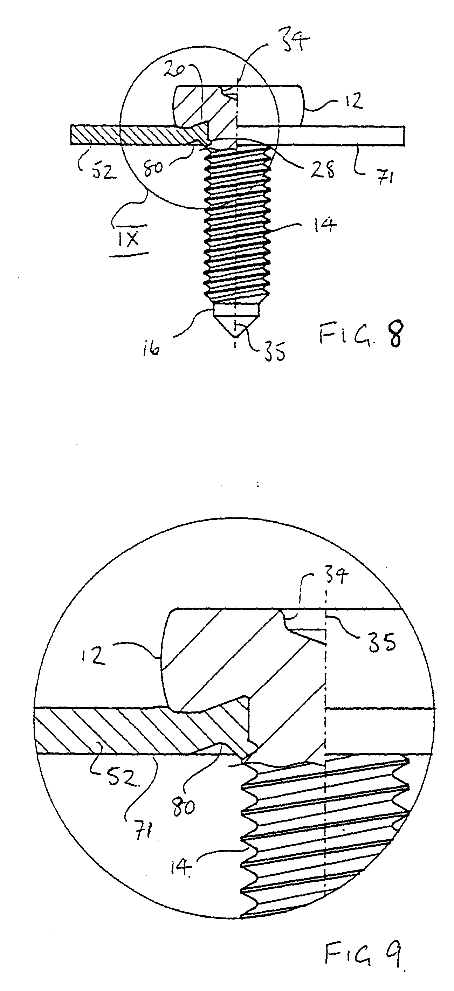

Die geschlossenen Felder 20 sind in diesem Beispiel in Draufsicht zumindest im wesentlichen quadratisch und dies ist in der Praxis eine relativ günstige Form für die Felder 20. Auch andere Formen der eingesäumten, d. h. an allen Seiten begrenzten Felder 20 sind durchaus im Rahmen der vorliegenden Erfindung denkbar. Mit der besonderen Ausbildung nach den Figuren 2 und 4 werden die Rippenteile 22, die sich im Anlagenbereich 18 des Kopfteils 12 befinden, und welche sich vorzugsweise in radialer Richtung erstrecken, in Richtung radial nach außen breiter. Sie gehen stufenlos ohne Unterbrechung in die Umfangsfläche 30 des Kopfteiles über. Im vorliegenden Beispiel sind acht Rippen 22 vorhanden, wobei die Anzahl der Rippen vorzugsweise zwischen sechs und acht liegt.

Aus den Figuren 1 und 3 ist ersichtlich, daß die umfangsmäßig geschlossenen Felder 20 ihre größte Tiefe (in Axialrichtung 35 des Elementes 10 gemessen) benachbart zum Schaftteil 16 haben. Obwohl die Umfangsfläche 30 und die schaftseitigen Flächen der Rippen 22 vornehmlich zur Anlagefläche gehören, können durch gezielte Verformung des entsprechenden Blechteils in die geschlossenen Felder hinein auch die Bodenflächen dieser geschlossenen Felder als Anlagefläche ausgenützt werden. Auf alle Fälle gelingt es mit dem erfindungsgemäßen Element, eine flächenmäßig große Anlagefläche zu schaffen, so daß das Element auch bei weichen Blechteilen eingesetzt werden kann, ohne daß man fürchten muß, daß eine kritische Flächenpressung resultiert. Besonders günstig ist es, wenn die Bodenflächen der geschlossenen Felder zumindest im wesentlichen auf einer Kegelmantelfläche mit einem eingeschlossenen Winkel von vorzugsweise 130 bis 140° liegen. Dieser Kegelwinkel ist mit dem Bezugszeichen α in Figur 3 angedeutet.

Den Figuren 1 und 3 ist weiterhin zu entnehmen, daß das Element eine Zentriervertiefung 34 aufweist, die beim Einsetzen des Elementes eine qualitativ hochwertige Führung desselben sicherstellt. Das Element weist außerdem eine kegelförmige Einführspitze 36 auf, die nicht nur bei der Anbringung des späteren, am Element zu befestigenden Gegenstands, sondern auch bei der Führung des Elementes im Setzkopf während des Einsetzens in das entsprechende Blechteil von Nutzen ist.

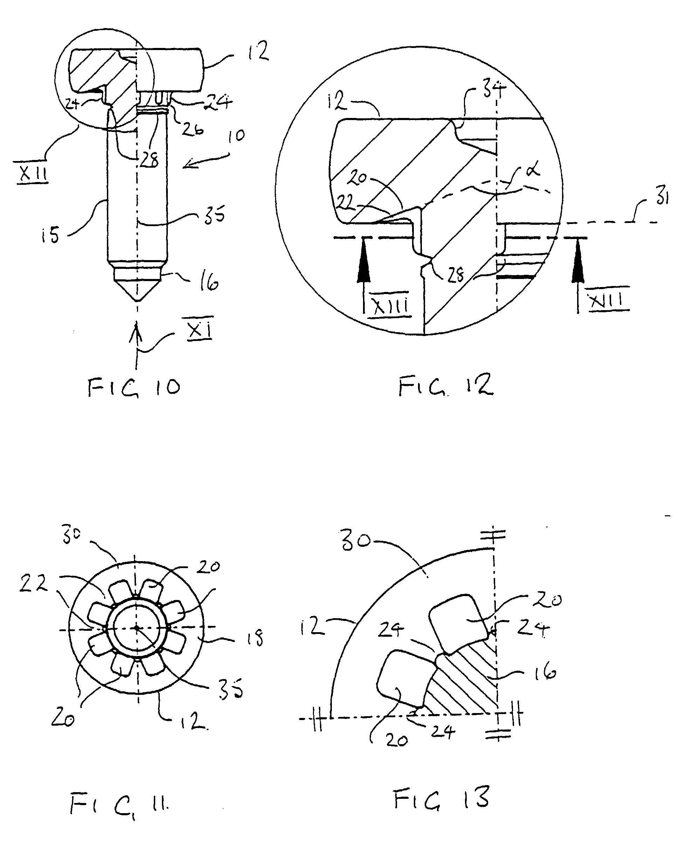

Das Einsetzverfahren ist schematisch in den Figuren 5 und 6 dargestellt.

Die Figur 5 zeigt mit 38 einen Setzkopf eines Fügewerkzeuges 40 mit einem Press- und Fügestempel 42 der in Pfeilrichtung 43 bewegbar ist.

Mit Bezugnahme auf die Figur 5 zeigt der Pfeil 43 die Zuführrichtung des Elementes 10 im Setzkopf. Die Elemente 10 werden vereinzelt dem Setzkopf 38 zugeschickt. Das in Figur 5 gezeigte Element gelangt unter Schwerkraft, ggf. auch unter Einwirkung von Preßluft oder des Press- und Fügestempels 42 durch die Bohrung 44 des Setzkopfes hindurch, bis das zu Führungszwecken teilsphärisch gerundete Kopfteil 12 des Elementes in Anlage an eine mittels einer Feder 46 vorgespannten Kugel 48 gelangt. In der Praxis sind vorzugsweise drei solche mit Federn vorgespannte Kugeln vorgesehen, die in Abständen von 120° um die Längsachse 50 des Setzkopfes 38 herum angeordnet sind. Im Stadium der Figur 5 ist das vorgelochte Blechteil 52, in welches das Element 10 einzusetzen ist, bereits zwischen dem Setzkopf 38 und einer Nietmatrize 54 eines Werkzeugunterteils 56 festgehalten. Das mit einem Gewinde 14 versehene Schaftteil 16 des Elementes ist bereits zum Teil durch das vorgefertigte Loch 58 im Blechteil 52 und durch eine hiermit koaxial ausgerichtete zylinderförmige Zentrieröffnung 60 der Nietmatrize 54 gelangt. Die Nietmatrize 54 selbst ist auswechselbar innerhalb einer Bohrung 57 des zum Fügewerkzeug gehörenden Werkzeugunterteils 56 angeordnet und über einer Platte 59 auf einer unteren Preßplatte 61 abgestützt.

Im späteren Stadium des Einsetzverfahrens bewegt sich der im Setzkopf 38 vorgesehenen Preß-Fügestempel 62 weiter nach unten und drückt das Kopfteil 12 des Elementes an den drei gefederten Kugeln 48 vorbei. Während dieser Bewegung wird der umlaufende, koaxial zum Loch 58 bzw. zur Achse 50 angeordnete Kronenbereich 64 der Nietmatrize 54 in das Material des Blechteils hineingepreßt und dies führt dazu, daß das Material des Blechteiles einerseits in die geschlossenen Felder 20 und andererseits in die Vertiefung 28 hineinfließt und somit eine sichere vernietete Verbindung zwischen dem Element 10 und dem Blechteil 52 erzeugt, die dann gemeinsam ein Zusammenbauteil bilden.

Besonders günstig ist es, wenn die Nietmatrize 54 im Kronenbereich 64 die Gestaltung aufweist, die aus der Figur 7 ersichtlich ist. D. h. dieser Kronenbereich der Nietmatrize weist zu Erzeugung der plastischen Verformung des Blechteilwerkstoffes eine umlaufende, wellenförmige, sich in Axialrichtung erstreckende Berge 72 und Täler 74 aufweisende Stirnfläche auf. Bei der Anwendung dieser Nietmatrize dienendie erhabenen Bergkuppen 72 dazu, das Material des Blechteiles in die konkaven Felder 20 in der Unterseite des Kopfteils 12 des Elementes 10 hineinzutreiben, und die Täler 74 kommen zur Anlage am Blechteil in Bereichen, wo die sich radial nach außen erstreckenden Teile der Rippen 22 vorliegen, so daß eine ausgeprägte Verdünnung des Blechteils in Bereich der Rippen erfindungsgemäß nicht eintritt.

Aufgrund der Verklemmung des Blechmaterials zwischen der Nietmatrize und der Unterseite des Kopfteiles 12 des Elementes 10 wird das Blechmaterial auch gezwungen, in die Vertiefung 28 hineinzufließen, so daß die gewünschte formschlüssige Verbindung eintritt. Eine besondere Maßnahme, das Element 10 winkelmäßig zu den Bergen und Tälern der Nietmatrize auszurichten, ist in der Praxis nicht notwending, da aus energetischen Überlegungen das Element 10 sich so zu drehen versucht, daß die Potentialenergie ein Minimum ist, und so eine Stellung einnimmt, in der die Berge 72 der Nietmatrize 54 mit den konkaven Feldern 20 ausgerichtet sind. D. h. die notwendige Ausrichtung erfolgt über eine leichte automatische Verdrehung des Elementes während des Setzvorganges.

Aufgrund der Ausbildung der Nietmatrize bildet sich im Blechteil, wie in den Figuren 8 und 9 gezeigt, auf der dem Kopfteil 12 des Elementes 10 abgewandten Seite eine sich zumindest im wesentlichen koaxial zur Längsachse 35 des Elementes 10 erstreckende und ggf. unterbrochene Rille 80 so aus, wie am besten aus der Figur 9 ersichtlich ist. Diese Rille weist, vor allem dann, wenn eine Nietmatrize mit der Form der Figur 7 verwendet wird, eine wellenförmige Bodenfläche auf, wobei allerdings die Kuppen der wellenförmigen Bodenfläche nicht über die Unterseite 7 des Blechteils hinausragen sollten, um einen sauberen Sitz des am Blechteil zu befestigenden Gegenstandes zu gewährleisten. Eine Ausnahme hierzu kommt dann vor, wenn der Gegenstand eine elektrische Klemme ist. In diesem Falle können die Kuppenbereiche der wellenförmigen Bodenfläche über die Unterseite des Blechteils hinausragen, um für eine höhere Flächenpressung an der Klemme, d. h. für eine bessere elektrischen Kontaktgabe zu sorgen.

Das Element der Erfindung kann aber auch anders ausgebildet werden als in Form eines Gewindebolzens. Die Figuren 10 bis 13, welche im wesentlichen den Figuren 1 bis 4 entsprechen, zeigen bspw. ein Element 10 in Form eines Lagerzapfens. Aufgrund der Gemeinsamkeiten mit dem Element 10 der bisherigen Figuren werden für das Element der Figuren 11 bis 12, wie auch für alle nachfolgenden Beispiele, die gleichen Bezugszahlen verwendet, wobei die bisherige Beschreibung auch für Teile mit den gleichen Bezugszeichen gilt und daher nicht unnötig wiederholt wird. Wenn jedoch Unterschiede vorliegen, die wichtig sind, so werden diese mit extra angesprochenen und ggf. anderen Bezugszahlen gekennzeichnet.

Die Unterschiede zwischen dem als Lagerzapfen ausgebildeten Element 10 der Figuren 10 bis 13 mit dem als Gewindebolzen ausgebildeten Element 10 der bisherigen Figuren sind eigentlich nicht sehr groß. Die Hauptunterschiede sind lediglich in zwei Punkten zu finden. Als erstes wird das Schaftteil 16 des Elementes 10 mit einer zylindrischen Lagerfläche 15 ausgebildet, so daß ein Gewinde als solches nicht vorhanden ist. Es wäre allerdings denkbar, einen Gewindeabschnitt vorzusehen, um bspw. das Blechteil mit einer entsprechenden Mutter bzw. Mutter- und Scheibenanordnung zwischen dem Kopteil 12 des Elementes 10 und der Mutter einzuklemmen, oder um eine innere Buchse des am Lagerzapfen gelagerten Gegenstandes gegen axiale Verschiebung in Längsrichtung des Elementes zu sichern.

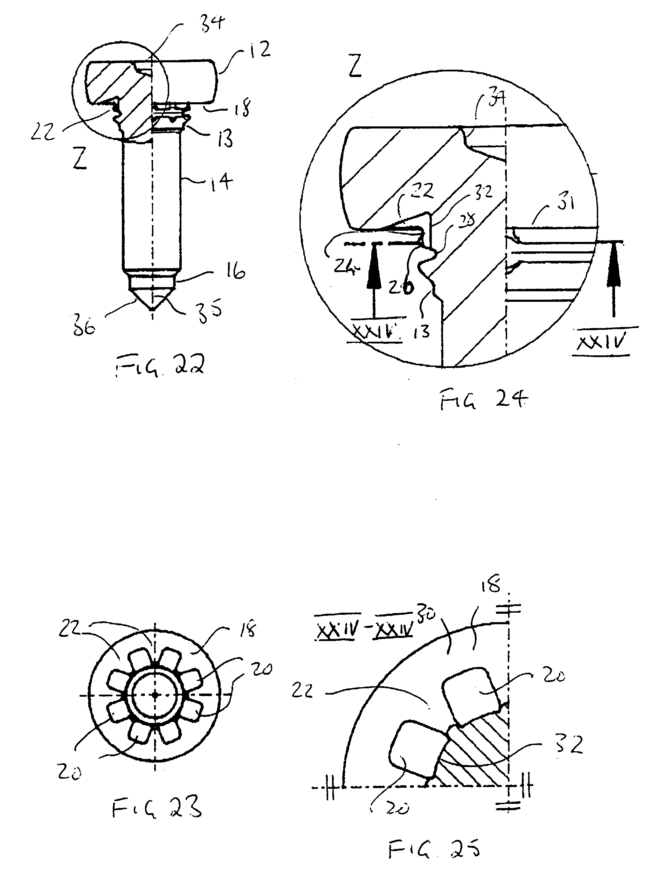

Die Rille 28, die zur Ausbildung der Vertiefung vorgesehen ist, und in die das Blechmaterial hineingepreßt wird, wird hier als umlaufende Rille anstatt als Gewinderille ausgebildet, d. h. die umlaufende Rille kann mit einer spiralförmigen Vertiefung gleichgesetzt werden, bei der der Steigungswinkel der Vertiefung 28 gleich 0° ist. Man merkt aus der Zeichnung der Figur 12, daß diese umlaufende Rille in etwa im Abstand der vorgesehenen Blechdicke von der Auflagefläche 18 des Kopfteils 12 angeordnet ist, und daß dieser Abstand weitaus größer ist, als im Stand der Technik möglich war. Dies bedeutet auch, daß die die Vertiefung 28 bildende Rille leichter herzustellen ist. Falls erwünscht, kann aber auch diese Vertiefung als Gewinderille ausgebildet werden, genauso wie im Beispiel der bisherigen Figuren. Die Rille bzw. die Vertiefung 28 wird in diesem Beispiel in einem im Vergleich zum Lagerbereich des Schaftteils Bereich größeren Durchmessers ausgebildet, was auch beim Element 10 der bisherigen Figuren 1 bis 9 auch möglich und sogar bevorzugt ist. Diese Möglichkeit ist in den Fig. 22 bis 25 gezeigt, welche ein Bolzenelement ähnlich dem Element der Fig. 1 bis 4 zeigen, wobei die Vertiefung hier als eine umlaufende Rille gezeigt ist, jedoch auch als eine spiralförmige Rille realisiert werden könnte. Aufgrund der Gemeinsamkeiten mit der Ausführung der Fig. 1 bis 4 sind in den Fig. 22 bis 25 die gleichen Bezugszeichen verwendet und die Beschreibung der Fig. 1 bis 4 gilt auch für die Fig. 22 bis 25. Der zylindrische Abschnitt größeren Durchmessers ist hier mit dem Bezugszeichen 13 gekennzeichnet. Die formschlüssige Verbindung zwischen dem Element 10 und einem Blechteil ist genauso realisiert und ausgebildet wie in der Figur 8 und 9 für das Beispiel eines Gewindebolzens dargestellt.

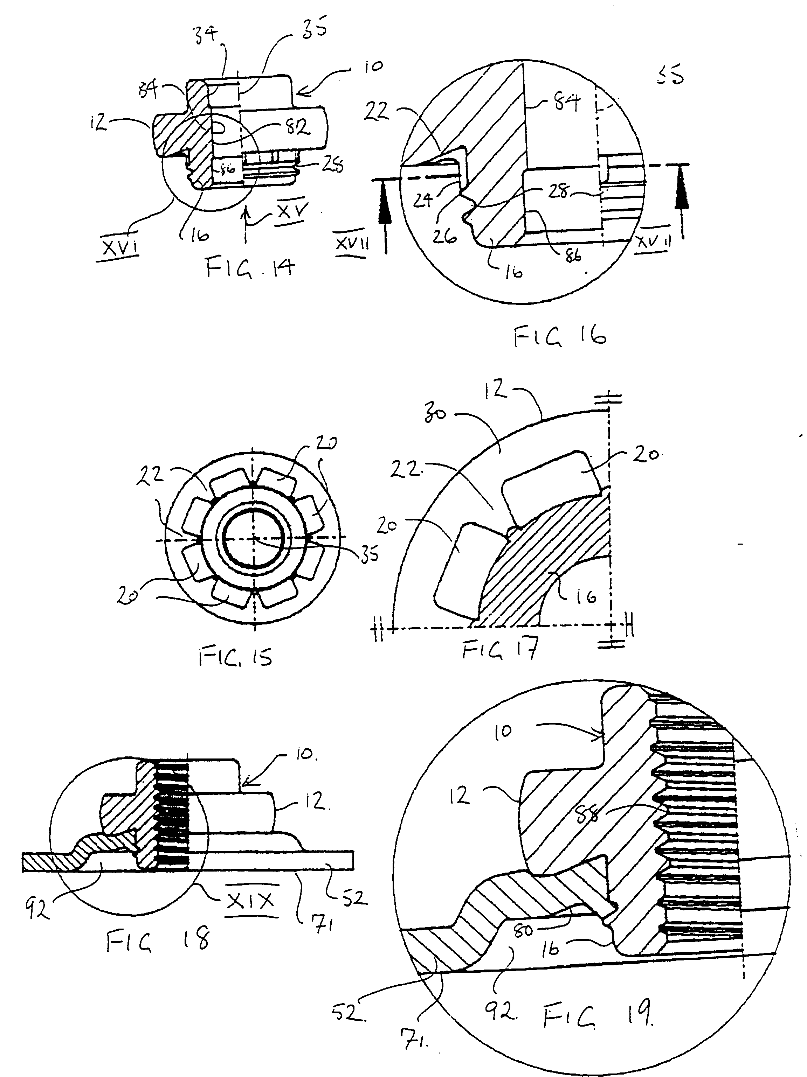

Das Element 10 muß aber nicht als männliches Teil ausgebildet werden, die Ausbildung als Lagerbuchse oder Mutterteil kommt ebenfalls in Frage, wie die Figuren 14 bis 17 bzw. 18 und 19 zeigen.

Bei der Lagerbuchse 10 der Figuren 14 bis 16 weist das Element 10 eine durchgehende Axialbohrung 82 auf, deren mittlerer Teil 84 als Lagerfläche ausgebildet ist. Das in Figur 14 obere Teil der durchgenden Bohrung 82 ist als Zentriervertiefung 34 ausgebildet und weist einen etwas größeren Durchmesser als die Lagerfläche 82 auf. Auf der Unterseite des Elementes 10 der mittleren Bohrung 82 befindet sich ein im Durchmesser erweiterter Abschnitt 86, der im wesentlichen dazu dient, zu verhindern, daß eine Verformung des Schaftteiles 16 des Mutterelementes aufgrund der plastischen Verformung des Blechteiles in die Felder 20 bzw. in die Vertiefung 28 zu einer Verengung der Durchgangsfläche der Bohrung 82 führt, die das Einführen des Lagerteils in das Element 10 verhindern würde.

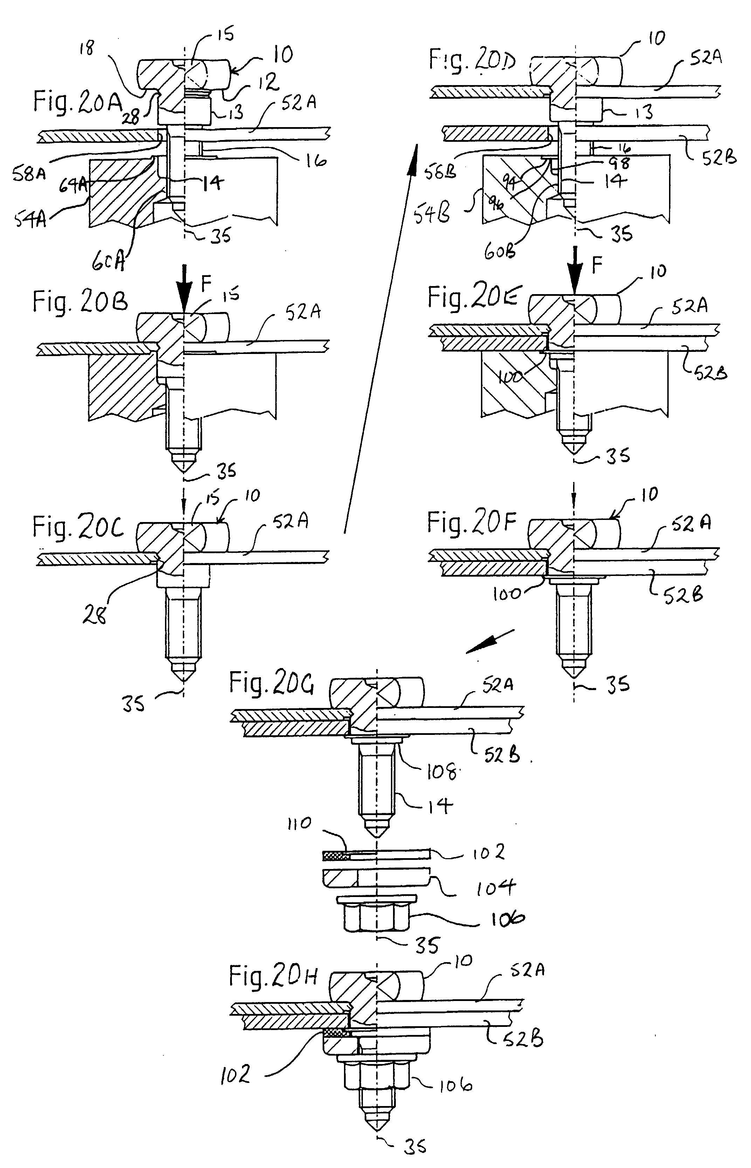

Die Bohrung 82 im Inneren des Elementes kann aber auch mit einem Gewinde 58 versehen werden, so wie in dem Zusammenbauteil nach den Figuren 18 und 19 gezeigt, so daß nach dem Vernieten des Mutterelementes mit dem Blechteil 52 eine Schraube in das Gewinde 88 des Mutterelementes eingeführt werden kann. Bei der Verwendung eines hohlen Elementes 10 nach den Figuren 18 und 19 kann es vorteilhaft sein, eine topfartige Vertiefung 92 in dem Blechteil 52 vorzusehen, damit beim Anschrauben eines Gegenstandes an dem aus dem Blechteil 52 und dem Element 10 bestehenden Zusammenbauteil der Gegenstand bündig an der Unterseite 71 des Blechteils anliegen kann. Diese topfartige Vertiefung 92 im Blechteil 52 kann entweder durch einen früheren Vorgang beim Lochen des Blechteils, oder aber durch eine besondere Formgebung der Stirnfläche der Nietmatrize bzw. des Setzkopfes während des Einsetzens des Elementes erzeugt werden.

Die Figuren 20 A bis H zeigen die verschiedenen nacheinanderfolgenden Schritte, die durchgeführt werden, um zwei Bauteile, hier in Form von Blechstreifen 52A, 52B miteinander zu verbinden, so daß sie entweder gegeneinander verdreht werden können oder in einer ausgewählten gegenseitigen Winkellage fixiert werden können.

Wie ersichtlich, sind alle Skizzen so dargestellt, daß die Teile auf der linken Seite der Längsachse 35 des Bolzenelementes teilweise geschnitten sind, die Teile auf der rechten Seite der Längsachse 35 jedoch in Seitenansicht gezeigt werden.

Die Figur 20 A zeigt zunächst wie ein Bolzenelement 10 durch ein vorgefertigtes Loch 58A im Blechstreifen 52A hindurchgeführt wird, wobei das mit einem Gewinde 14 versehene Schaftteil 16 des Bolzenelementes in eine koaxial mit dem Loch 58A und der Längsachse 35 des Bolzenelementes 12 ausgerichtete zylinderförmige Zentrieröffnung 60 eine Nietmatrize 54A aufgenommen wird. Der Fügevorgang findet in einer Presse statt, welche der Einfachheit halber nicht gezeigt ist.

Das Bolzenelement 10 besteht in diesem Beispiel aus einem Kopfteil 12 und einem Schaftteil 16, welche unmittelbar unterhalb des Kopfteils 12 einen zylindrischen Abschnitt 13 größeren Durchmessers aufweist, wobei eine radiale Vertiefung in Form einer umlaufenden Rille 28 im vergrößerten Durchmesserabschnitt 13 unmittelbar unterhalb des Kopfteils 12 vorgesehen ist. In diesem Beispiel ist die Unterseite 18 des Kopfteils 12 plan ausgebildet und erstreckt sich rechtwinklig zur Längsachse 35 des Bolzenelementes 10. Das heißt, hier sind keine konkaven Felder vorgesehen, wie beispielsweise bei dem Element nach den Figuren 1 bis 4 der Fall ist.

Die Figur 20 B zeigt dann den Zustand nach Schließung der Presse, so daß eine Preßkraft F auf das Kopfteil 12 des Bolzenelementes 10 ausgeübt wird und die Matrize 54, die am unteren Ende abgestützt wird, das Blechteil 52A verformt hat, so daß Material aus dem Blechstreifen 52A in die ringförmige Vertiefung 28 hineingeschoben wurde. Die entsprechende Verformung des Blechstreifens 52A durch die Matrize 54A folgt aufgrund der umlaufenden Matrizenlippe 64, welche entweder die Form einer Ringwulst oder gegebenenfalls entsprechend der Kronenausbildung nach der Figur 7 ausgeführt werden kann. Nach Entfernung des Blechstreifens 52A mit Bolzenelement 10 aus der Presse hat man dann das Zusammenbauteil nach der Figur 20 C, wobei der Blechstreifen 52A relativ zum Bolzenelement 10 um die Achse 35 verdrehbar, jedoch axial unverlierbar an diesem befestigt ist, und zwar aufgrund der formschlüssigen Verbindung im Bereich der Vertiefung 28.

Es ist ersichtlich, daß das Kopfteil des Bolzenelementes 10 zwei einander gegenüberliegende Abflachungen 15 aufweist, das die Anbringung eines Werkzeuges ermöglicht, um das Element selbst verdrehsicher zu halten, was in einem späteren Stadium erforderlich ist.

Das Zusammenbauteil nach der Figur 20 C wird dann mit dem zweiten Blechstreifen 52B entsprechend der Figur 20 D zusammengefügt, in dem der zylindrische Abschnitt 13 des Schaftteils 16 durch ein vorgefertigtes Loch 58B des zweiten Blechstreifens 52B hindurch geführt wird, wobei das Gewindeteil 14 des Schaftteils 16 in eine Zentrieröffnung 60B einer zweiten Matrize 54B aufgenommen wird. Dieser Fügevorgang findet ebenfalls in einer Presse statt.

Beim Schließen der Presse wird eine Kraft F nochmals auf das Kopfteil 12 des Bolzenelementes 10 ausgeübt, während die Matrize 54B am unteren Ende abgestützt wird. Die Matrize 54B weist eine ringförmige Vertiefung 94 in seiner Stirnfläche auf, welche über eine Ringkante 96 in eine zylinderförmige Aufnahmekammer 98 für das untere Ende des zylinderförmigen Abschnittes 13 des Bolzenelementes 10 übergeht. Der Durchmesser der Ringkammer 98 ist geringfügig kleiner gewählt als der Außendurchmesser des zylindrischen Abschnittes 13 und dies bedeutet, daß bei der Schließung der Presse, wie in Figur 20 E dargestellt, die ringförmige Kante 96 als eine Schubumformkante arbeitet und einen kleinen ringförmigen Wulst 100 bildet, welcher in der Ringausnehmung 94 aufgenommen wird und ausreicht, um den zweiten Blechstreifen 52B so formschlüssig zu halten, daß es gegen axiale Trennung vom Bolzenelement und vom ersten Blechstreifen 52A gesichert ist, wobei aber eine gegenseitige Verdrehung zwischen den beiden Blechstreifen 52A und 52B noch möglich ist. Die Zusammenbausituation nach der Herausnahme des Zusammenbauteils aus der Presse ergibt sich dann aus der Figur 20 F.

Wie in der Figur 20 G gezeigt, wird der Blechteilverbund aus der Figur 20 F nunmehr mit einer Gleitscheibe 102, mit einem Klemmring 104 und mit einer Mutter 106 gesichert und zu dem entgültigen Zusammenbau nach Figur 20 H montiert.

Dabei liegt der Klemmring 104 an der Ringfläche 108 zwischen dem zylindrischen Abschnitt 13 größeren Durchmessers und dem Gewindeteil 14 und wird in fester Anlage gegen diese Ringfläche 108 durch die Mutter 106 gehalten. Die axiale Dicke der Gleitscheibe 102, welche eine Ringausnehmung 110 aufweist, die den Ringwulst 100 aufnimmt, ist so bemessen, daß in diesem Beispiel die zwei Blechstreifen 52A und 52B noch gegeneinander und gegenüber dem Bolzenelement 10 verdreht werden können. Es könnte sich beispielsweise bei den Blechstreifen 52A und 52B um Teile eines Scherengelenks handeln, beispielsweise bei einer Fensterheberanordnung in einem Kraftfahrzeug. Dabei könnte es sich beim Mutterelement 106 beispielsweise um in einer Türinnenhaut fest eingebrachtes Mutterelement handeln. Zum Festziehen des Bolzenelementes gegenüber dem Mutterelement sind hier die Abflachungen 15 nützlich.

Eine andere Möglichkeit besteht darin, die Scheibe 102 nicht als Gleitscheibe auszubilden, sondern als eine Feststellscheibe mit einer axialen Dicke, welche so gewählt ist, daß beim Festziehen des Bolzenelementes und des Mutterelementes die zwei Blechstreifen 52A und 52B in einer vorgewählten Winkellage gegeneinander verspannt werden, so daß diese einmal eingestellte Winkellage beibehalten wird. Die Feststellscheibe bzw. Gleitscheibe kann auch integral mit dem Klemmring ausgebildet sein.

In einer weiteren Ausführungsform wird als Bolzenelement 10 ein Bolzenelement genommen, das im wesentlichen dem Element nach den Figuren 1 bis 4 der vorliegenden Anmeldung entspricht, wobei die ringförmige Vertiefung aber in einem Zylinderabschnitt größeren Durchmessers ausgebildet wird, ähnlich wie bei dem soeben besprochenen Beispiel nach den Figuren 20 A bis H. Die ringförmige Vertiefung kann dann als spiralförmige Vertiefung vorliegen und in diesem Beispiel sind auch die geschlossenen Felder 20 und die Rippen 22 vorgesehen. Dies bedeutet, daß nach dem Fügen des Elementes 10 mit dem ersten Blechstreifen 52A sich eine Situation ergibt, wobei das Bolzenelement auch drehfest mit dem Blechstreifen 52A verbunden ist. Das weitere Vorgehen entspricht aber dann dem bisherigen Vorgang, wie im Zusammenhang mit den Figuren 20 D bis 20 H erläutert, so daß nach wie vor eine relative Verdrehbarkeit zwischen den Blechstreifen 52A und 52B gegeben ist. Diese relative Drehbarkeit kann nach Anbringung des Mutterelementes entweder beibehalten werden (unter Anwendung einer Gleitscheibe 102, welche die gegenseitige Verdrehbarkeit noch zuläßt) oder nach Einstellung einer erwünschten Winkellage aufgehoben werden, durch die Anwendung einer Feststellscheibe 102 entsprechender Dicke.

Besonders vorteilhaft bei der Vorgehensweise nach den Figuren 20 A bis H ist, daß der Zusammenhalt der verschiedenen zusammengebauten Teile in jedem Stadium des Verfahrens gewährleistet ist. Beispielsweise kann das erste Zusammenbauteil nach der Figur 20 C bestehend aus einem Bolzenelement und einem Blechstreifen 52A zu einer anderen Werkstation oder zu einem anderen Werk transportiert werden, ohne befürchten zu müssen, daß das Element sich vom Bleichstreifen 52A in ungewollter Weise trennt. In entsprechender Weise kann das Zusammenbauteil nach der Figur 20 F, d.h. mit zwei Blechstreifen 52A, 52B und dem Bolzenelement ebenfalls zu einer anderen Werkstation oder zu einem anderen Werk transportiert werden, ohne daß ein Auseinanderfallen der drei miteinander verbundenen Teile zu befürchten ist. Das heißt, der Zusammenhalt ist gewährleistet bis zu dem endgültigen Zusammenbau nach der Figur 20 H.

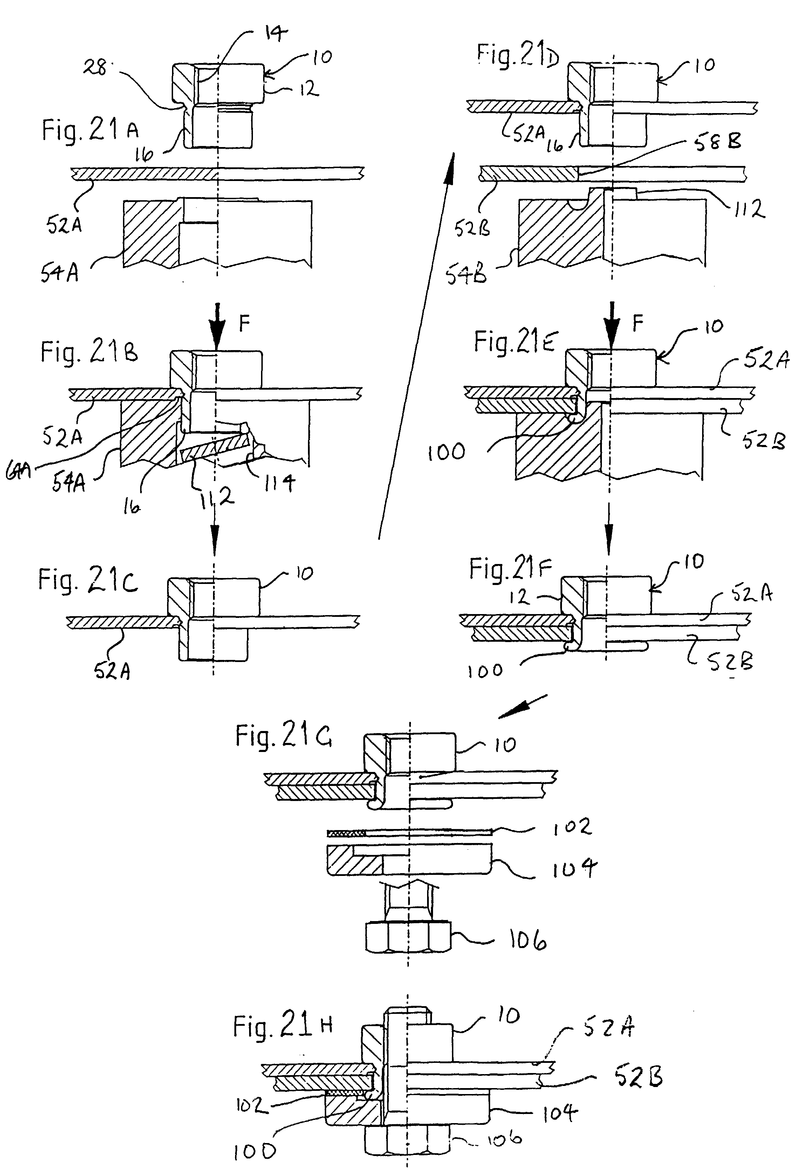

Die in den Figuren 20 A bis H dargestellte Vorgehensweise läßt sich aber auch mit einem Befestigungselement realisieren, das in Form einer Nietmutter oder einer Mutter mit Stanz- und Nietverhalten ausgebildet ist. Dies wird nunmehr anhand der Figuren 21 A bis H erläutert. Da die Zusammenbausituation und auch der Ablauf des Herstellungsverfahrens der bzw. dem des Herstellungsverfahrens nach den Figuren 20 A bis H sehr ähnlich ist, werden für die gleichen Teile die gleichen Bezugszeichen verwendet und es werden hauptsächlich nur die unterschiedlichen Aspekte des Herstellungsverfahrens beschrieben.

Das Element 10 nach den Figuren 21 A bis H ist als Stanznietmutter ausgebildet und weist ein Kopfteil 12 mit Innengewinde 14 sowie ein als Stanz- und Nietteil ausgebildetes zylinderförmiges Schaftteil 16 auf, wobei eine ringförmige radiale Vertiefung 28 sich im Schaftteil 16 unmittelbar unterhalb des Kopfteils 12 befindet. Die Figur 21 A zeigt schematisch den ersten Herstellungschritt in einer Presse, bei dem das Element 10 zusammen mit einer Nietmatrize 54A benutzt wird, um einen Stanzbutzen aus dem Blechstreifen 52A zu schneiden und den Blechstreifen 52A formschlüssig mit dem Mutterelement 10 zu verbinden. Die Figur 21 B zeigt die Situation nach dem Schließen der Presse. Hier hat das als Stanz- und Nietabschnitt ausgebildete Schaftteil 16 des Mutterelementes in Zusammenarbeit mit der Stanz- und Nietmatrize 54A einen Stanzbutzen 112 aus dem Bleichstreifen 52A getrennt und dieser Stanzbutzen wird über die mittlere Öffnung 114 der Stanzmatrize 54A entsorgt. Gleichzeitig mit dem Schließen der Presse ist der Kronenbereich 64A der Stanz- und Nietmatrize 54A in das Material des Blechstreifens 52A gedrückt worden, so daß dieses Material in die Ringvertiefung 28 hineingeschoben worden ist, wodurch nach der Figur 21 C eine formschlüssige Verbindung zwischem dem Mutterelement 10 und dem Bleichstreifen 52A sich ergibt, wobei aber das Mutterelement relativ zum Blechstreifen 52A verdreht werden kann.

Nach der Figur 21 D wird das Zusammenbauteil nach Figur 21 C dann mit einem zweiten Blechstreifen 52B zusammengefügt, in dem der Stanz- und Nietabschnitt 16 des Mutterelementes 10 durch ein vorgefertigtes Loch 58B im zweiten Blechstreifen 52B hindurchgeführt wird. Dies erfolgt ebenfalls in einer Presse und unter Anwendung einer Nietmatrize 54B mit einem mittleren Zapfenteil 112, welches von einer halbrunden Vertiefung umringt ist und bei Schließung der Presse den Stanz- und Nietabschnitt 16 zu einem Nietbördel 100 umformt, das entsprechend dem Ringwulst 100 der Figur 20 F den zweiten Blechstreifen 52B unverlierbar an dem ersten Blechstreifen 52A hält. Nach der Herausnahme aus der Presse sieht das Zusammenbauteil dann so aus wie in der Figur 21 F dargestellt. Das heißt, die zwei Blechstreifen 52A und 52B sind formschlüssig zwischen dem ringförmigen Nietbördel 100 und dem Kopfteil 12 des Mutterelementes gehalten, sind jedoch gegeneinander und auch gegenüber dem Mutterelement 10 verdrehbar.

Die Figur 21 G zeigt nun wie dieser provisorische Zusammenbau zu einem fertigen Zusammenbauteil komplementiert wird, und zwar unter Anwendung einer Gleitscheibe, eines Klemmringes 104 und einem Schraubbolzen 106, dessen Gewinde mit dem Gewindeteil 14 des Mutterelementes 10 zusammenarbeitet. Wie aus der Figur 21 H ersichtlich, klemmt das Kopfteil des Bolzenelementes 106 den Klemmring 104 an der Unterseite des Nietbördels 100, so daß ein Kraftschluß existiert zwischen dem Mutterelement 10, dem Klemmring 104 und dem Kopfteil des Bolzenelementes 106. Dabei ist die axiale Dicke der Gleitscheibe 102 so gewählt, daß die gegenseitige Drehbarkeit der beiden Bleichstreifen 52A und 52B noch gegeben ist. Die Gleitscheibe 102 hat ein mittleres Loch mit einem Innendurchmesser, der ausreichend groß ist, um das Nietbördel 100 aufzunehmen, wobei dieses Nietbördel 100 in dieser Ausführungsform in einer Ringausnehmung des Klemmringes 104 aufgenommen wird. Bei Verwendung einer dickeren Gleitscheibe 102 könnte die Ringausnehmung im Klemmring 104 weggelassen werden.

Die Möglichkeit besteht aber auch, die Scheibe 102 nicht als Gleitscheibe sondern als Feststellscheibe auszubilden, so daß die beiden Blechstreifen 52A, 52B in einer vorgewählten Winkelstellung zueinander fixiert werden können. In diesem Falle, was auch grundsätzlich bei der Ausführung nach den Figuren 20 A bis 20 H möglich ist, kann die Gleitscheibe 102 einfach weggelassen werden und der Klemmring 104 so ausgebildet werden, daß die erwünschte Klemmung eintritt.

Es ist nicht unbedingt erforderlich, daß das Mutterelement 10 als Stanz- und Nietmutter ausgebildet wird. Man könnte mit einem Blechstreifen 52A arbeiten, der vorgelocht ist, so daß der Stanz- und Nietabschnitt 16 lediglich als Nietabschnitt ausgebildet werden muß.

Auch besteht die Möglichkeit das Mutterelement 10 so auszubilden, wie in den Figuren 14 bis 19 dargestellt, wobei allerdings der Nietabschnitt 16 verlängert werden muß, um eine ausreichende Länge zu erhalten, um den zweiten Blechstreifen 52B zu halten. Wenn man so vorgeht, dann ist das Mutterelement 10 drehfest im ersten Blechstreifen 52A angebracht, was aber die gegenseitige Verdrehung des Blechstreifens 52A und 52B nicht verhindert.

## Patentansprüche

1. Ein durch Nieten in ein Blechteil (52) einsetzbares Element (10) bestehend aus einem Schaftteil (16) und einem einstückig daran angeformten Kopfteil (12), wobei das Element (10) an seiner als Anlagefläche (18) dienenden Unterseite konkave, umfangsmäßig geschlossene Felder (20) sowie mindestens eine sich spiralförmig um das Schaftteil herum angeordnete Vertiefung (28) aufweist, dadurch gekennzeichnet, daß die konkaven Felder (20) teilweise durch sich vom Schaftteil (16) nach außen wegerstreckende Rippen (22) begrenzt sind, wobei die schaftseitigen Enden (24) der Rippen (22) sich erhaben am Schaftteil (16) entlang erstrecken und an den dem Kopfteil abgewandten Enden (26) in die Vertiefung übergehen.

2. Element nach Anspruch 1, dadurch gekennzeichnet, daß das Schaftteil (16) des Elements im Bereich der erhabenen Rippen (28) im Vergleich zum vom Kopfteil (12) abgewandten Schaftteil (16) einen größeren Durchmesser aufweist, wobei die mindestens eine Vertiefung (28) sich in diesem Bereich des größeren Durchmessers befindet.

3. Element nach Anspruch 1 oder 2, dadurch gekennzeichent, daß die umfangsmäßig geschlossenen Felder (20) benachbart zum Schaftteil (16) ihre größte Tiefe haben und/ oder daß die geschlossenen Felder (20) an ihrer radial äußeren Begrenzung durch eine Umfangsfläche (30) des Kopfteils (12) begrenzt sind, wobei die Rippenteile (22), die sich im Anlagenbereich (18) des Kopfteils (12) befinden, und welche sich vorzugsweise in radialer Richtung erstrecken, vorzugsweise radial nach außen breiter werden und ohne Unterbrechung in eine Umfangsfläche (20) des Anlagenbereiches (18) des Kopfteils (12) übergehen.

4. Element nach einem der vorhergehenden Ansprüche, dadurch gekennzeichnet, daß die Anzahl der Rippen (22) vorzugsweise zwischen 6 und 8 liegt, und/oder daß die geschlossenen Felder (22) in Draufsicht zumindest im wesentlichen quadratisch sind, wobei die Bodenflächen der geschlossenen Felder (20) vorzugsweise zumindest im wesentlichen auf einer Kegelmantelfläche mit einem eingeschlossenen Winkel (α) von vorzugsweise 130 bis 140° liegen.

5. Element nach einem der vorhergehenden Ansprüche, dadurch gekennzeichnet, daß die der Anlagefläche (18) abgewandte Seite des Kopfteils (12) eine zur Längsachse des Elements koaxiale Zentriervertiefung (34) aufweist und/oder daß das Schaftteil (16) an seinem dem Kopfteil (12) abgewandten Ende eine Zentrier- bzw. Einfädelspitze (36) aufweist.

6. Element nach einem der vorhergehenden Ansprüche, dadurch gekennzeichnet, daß es als Befestigungselement in Form eines Gewindebolzens (10) ausgebildet ist, wobei vorzugsweise die mindestens eine spiralförmige Vertiefung (28) durch eine Gewinderille gebildet ist.

7. Element (10) nach einem der vorhergehenden Ansprüche in Kombination mit einem Blechteil (52), wobei das Metall des Blechteils (52) zumindest teilweise in die geschlossenen Felder (20) und in die mindestens eine Vertiefung (28) plastisch eingeformt ist, wobei das Blechteil (52) an der der Anlagefläche (18) des Kopfteils (12) abgewandten Seite vorzugsweise eine sich zumindest im wesentlichen koaxial zur Längsachse des Elements erstreckende und gegebenenfalls unterbrochene Rille (80) aufweist, welche gegebenenfalls eine wellenförmige Bodenfläche (81) aufweist, wobei die Rille wahlweise als unterbrochene Rille mit zwischen den Rillenabschnitten über die Ebene des Blechteils (52) erhabenen Bereiche zur elektrischen Kontaktgabe ausgebildet ist.

8. Element nach Anspruch 7 in Kombination mit einem weiteren Blechteil (52B), durch welches sich das Schaftteil (16) des Befestigungselementes (10) ebenfalls erstreckt, wobei die Vertiefung als eine sich um das Schaftteil herum erstreckende Radialvertiefung ausgebildet ist, und die Rippen gegebenenfalls weggelassen werden, wobei das erste und das zweite Blechteil (52A, 52B) gegeneinander um die Längsachse (35) des Befestigungselementes verdrehbar sind und der Zusammenbau durch einen radial nach außen gerichteten Vorsprung (100) des Schaftteils gegen Auseinanderfallen gesichert ist, welche durch Verformung des Schaftteils (16) gebildet ist, wobei vorzugsweise ein mit dem Befestigungselement (10) zusammenarbeitendes weiteres Befestigungselement (106) vorgesehen ist, welches den Zusammenbau zusätzlich sichert und/oder eine Gleitscheibe (102) trägt, welche die gegenseitige Verdrehung der beiden Bauteile zwischen dem Kopfteil des Befestigungselementes und der Gleitscheibe zuläßt oder eine Fixierscheibe (102) trägt, welche die beiden Bauteile (52A, 52B) in einer gewählten gegenseitigen Winkelstellung fixiert.

9. Verfahren zum Herstellen der Kombination nach Anspruch 7, gekennzeichnet durch die nachfolgenden Schritte:
1. die Ausbildung durch Stanzen und / oder Bohren eines Loches (58) im Blechteil (52)
2. das Einsetzen des Schaftteils (16) des Elementes durch das so gebildete Loch (58) und
3. die plastische Verformung des Materials des Blechteils (52) in der Nähe des Lochrandes, damit dieses zumindest teilweise die geschlossenen Felder (20) und die mindestens eine Vertiefung (28) ausfüllt und eine formschlüssige Verbindung zwischen dem Element (10) und dem Blechteil (52) bildet.

## Claims

1. An element (10) which can be inserted by riveting into a sheet metal part (52) comprising a shaft part (16) and a head part (12) formed in one piece thereon, wherein the element (10) has, at its underside serving as a contact surface (18), concave, peripherally closed fields (20) and also at least one recess (28) which is arranged spirally around the shaft part, characterized in that the concave fields (20) are partly bounded by ribs (22) which extend away from the shaft part (16), with the shaft side ends (24) of the ribs (22) extending in raised manner along the shaft part (16) and merging into the recess at the ends (26) remote from the head part.

2. Element in accordance with claim 1, characterized in that the shaft part (16) of the element has a larger diameter in the region of the raised ribs (28) in comparison to the shaft part (16) remote from the head part (12), with the at least one recess (28) being located in this region of larger diameter.

3. Element in accordance with claim 1 or claim 2, characterized in that the peripherally closed fields (20) have their greatest depth adjacent to the shaft part (16) and/or that the closed fields (20) are bounded at their radially outer boundary by a peripheral surface (30) of the head part (12), with the rib parts (22), which are located in the contact region (18) of the head part (12), and which preferably extend in the radial direction, preferably becoming broader radially outwardly and merging without interruption into a peripheral surface (20) of the contact region (18) of the head part (12).

4. Element in accordance with one of the preceding claims, characterized in that the number of ribs (22) preferably lies between six and eight, and/or in that the closed fields (22) are at least substantially square in plan view, with the base surfaces of the closed fields (20) preferably lying at least substantially on a conical surface with an enclosed angle (α) of preferably of 130 to 140°.

5. Element in accordance with one of the preceding claims, characterized in that the side of the head part (12) remote from the contact surface (18) has a centring recess (34) coaxial to the longitudinal axis of the element, and/or in that the shaft part (16) has a centring tip or insertion tip (36) at its end remote from the head part (12).

6. Element in accordance with one of the preceding claims, characterized in that it is formed as a fastener element in the form of a threaded bolt (10), with the at least one spiral recess (28) preferably being formed by a thread groove.

7. Element (10) in accordance with one of the preceding claims in combination with a sheet metal part (52), wherein the metal of the sheet metal part (52) is plastically formed at least partly into the closed fields (20) and into the at least one recess (28), with the sheet metal part (52) preferably having, at the side remote from the contact surface (18) of the head part (12), a groove (80) which extends at least substantially coaxial to the longitudinal axis of the element and is optionally interrupted, with the groove optionally having a wave-like base surface (81), with the groove optionally being formed as an interrupted groove with regions raised beyond the plane of the sheet metal part (52) between the groove sections for electrical contact generation.

8. Element in accordance with claim 7 in combination with a further sheet metal part (52B), through which the shaft part (16) of the fastener element (10) likewise extends, wherein the recess is formed as a radial recess extending around the shaft part and the ribs are optionally omitted, wherein the first and the second sheet metal parts (52A, 52B) are rotatable relative to one another about the longitudinal axis (35) of the fastener element, and the assembly is secured against coming apart by a radially outwardly directed projection (100) of the shaft part, which is formed by deformation of the shaft part (16), wherein a further fastener element (106) which cooperates with the fastener (10) is provided and additionally secures the assembly, and/or carries a sliding washer (102) which permits the relative rotation of the two components between the head part of the fastener element and the sliding washer, or carries a fixing washer (102) which fixes the two components (52A, 52B) in a selected mutual angular position.

9. Method for the manufacture of the combination of claim 7, characterized by the following steps:
1. the formation of a hole (58) in the sheet metal part (52) by piercing and/or boring,
2. the insertion of the shaft part (16) of the element through the so-formed hole (58), and
3. the plastic deformation of the material of the sheet metal part (52) in the vicinity of the margin of the hole so that this material at least partly fills out the closed fields (20) and the at least one recess (28) and forms a shape locked connection between the element (10) and the sheet metal part (52).

## Revendications

1. Elément (10) pouvant être monté par rivetage dans une pièce en tôle (52), constitué d'un élément de tige (16) et d'un élément de tête (12) formé d'un seul tenant sur celui-ci, l'élément (10) comportant sur sa face inférieure servant de surface d'appui (18) des champs concaves (20) fermés en périphérie, ainsi qu'au moins un renfoncement (28) qui est disposé en forme de spirale autour de l'élément de tige, caractérisé en ce que les champs concaves (20) sont partiellement délimités par des nervures (22) qui s'écartent de l'élément de tige (16) vers l'extérieur, les extrémités (24) des nervures (22) situées du côté de la tige s'étendant en faisant saillie le long de l'élément de tige (16), et passant dans le renfoncement au niveau des extrémités (26) opposées à l'élément de tête.

2. Elément selon la revendication 1, caractérisé en ce que, par rapport à l'élément de tige (16) opposé à l'élément de tête (12), l'élément de tige (16) de l'élément a un diamètre plus important dans la zone des nervures (22) faisant saillie, le renfoncement ou chaque renfoncement (28) se trouvant dans cette zone de diamètre plus important.

3. Elément selon la revendication 1 ou 2, caractérisé en ce que les champs (20) fermés en périphérie ont leur profondeur la plus importante au voisinage de l'élément de tige (16), et/ou en ce que les champs (20) fermés sont délimités sur leur contour radial extérieur par une surface périphérique (30) de l'élément de tête (12), les parties nervurées (22), qui sont situées dans la zone d'appui (18) de l'élément de tête (12), et qui s'étendent de préférence dans la direction radiale, s'élargissant de préférence radialement vers l'extérieur, et se transformant sans interruption en une surface périphérique (20) de la zone d'appui (18) de l'élément de tête (12).

4. Elément selon l'une quelconque des revendications précédentes, caractérisé en ce que le nombre de nervures (22) se situe de préférence entre 6 et 8, et/ou en ce que, vus de dessus, les champs (20) fermés sont sensiblement carrés, les surfaces de fond des champs (20) fermés se situant de préférence, au moins pour l'essentiel, sur une surface d'enveloppe conique incluant un angle (α) qui est de préférence de 130 à 140°.

5. Elément selon l'une quelconque des revendications précédentes, caractérisé en ce que le côté de l'élément de tête (12) opposé à la surface d'appui (18) comporte un renfoncement de centrage (34) qui est coaxial à l'axe longitudinal de l'élément, et/ou en ce que l'élément de tige (16) comporte une pointe de centrage ou d'insertion (36) au niveau de son extrémité opposée à l'élément de tête (12).

6. Elément selon l'une quelconque des revendications précédentes, caractérisé en ce qu'il est réalisé en tant qu'élément de fixation sous la forme d'un boulon fileté (10), le ou chaque renfoncement (28) en forme de spirale étant formé par une gorge du filetage.

7. Elément (10) selon l'une quelconque des revendications précédentes en combinaison avec une pièce en tôle (52), le métal de la pièce en tôle (52) étant au moins partiellement déformé plastiquement dans les champs (20) fermés et dans le ou chaque renfoncement (28), la pièce en tôle (52) comportant du côté opposé à la surface d'appui (18) de l'élément de tête (12) une gorge (80) qui s'étend, de préférence, sensiblement coaxialement à l'axe longitudinal de l'élément et qui est le cas échéant interrompue, laquelle comporte en outre une surface de fond (81) ondulée, la gorge étant réalisée, au choix, sous la forme d'une gorge interrompue ayant entre les parties de gorge des zones faisant saillie du plan de la pièce en tôle (52), qui sont destinées à l'établissement du contact électrique.

8. Elément selon la revendication 7 en combinaison avec une autre pièce en tôle (52B), à travers laquelle s'étend également l'élément de tige (16) de l'élément de fixation (10), le renfoncement étant réalisé sous la forme d'un renfoncement radial s'étendant autour de l'élément de tige, et les gorges étant le cas échéant supprimées, les première et deuxième pièces en tôle (52A, 52B) pouvant être tournées l'une par rapport à l'autre autour de l'axe longitudinal (35) de l'élément de fixation, et l'assemblage étant bloqué par une partie en saillie (100) orientée radialement vers l'extérieur de l'élément de tige afin de ne pas pouvoir se dissocier, laquelle est formée par une déformation de l'élément de tige (16), un autre élément de fixation (106) étant de préférence prévu, qui agit conjointement avec l'élément de fixation (10), bloque l'assemblage de façon complémentaire et/ou porte une rondelle de glissement (102) qui permet la rotation mutuelle des deux pièces entre l'élément de tête de l'élément de fixation et la rondelle de glissement, ou qui porte une rondelle de blocage (102) qui bloque les deux pièces (52A, 52B) dans une position angulaire mutuelle choisie.

9. Procédé destiné à la fabrication de la combinaison selon la revendication 7, caractérisé par les étapes suivantes :
1. réalisation d'un trou (58) par découpe et/ou perçage dans la pièce en tôle (52),
2. insertion de l'élément de tige (16) de l'élément par le trou (58) ainsi formé, et
3. déformation plastique du matériau de la pièce en tôle (52) à proximité du bord du trou, afin que celui-ci comble au moins partiellement les champs (20) fermés et le ou chaque renfoncement (28), et constitue une liaison par complémentarité de forme entre l'élément (10) et la pièce en tôle (52).
